Europäisches Patentamt

European Patent Office

Office européen des brevets

(11) Veröffentlichungsnummer : **0 147 543**
**B1**

(12)

# EUROPÄISCHE PATENTSCHRIFT

(45) Veröffentlichungstag der Patentschrift :
09.09.87

(21) Anmeldenummer : 84112005.8

(22) Anmeldetag : 06.10.84

(51) Int. Cl.⁴ : **C 03 C 8/10, C 03 C 3/072,
C 03 C 3/108**

(54) Luminieszierende Gläser.

(30) Priorität : 23.12.83 DE 3346686

(43) Veröffentlichungstag der Anmeldung :
10.07.85 Patentblatt 85/28

(45) Bekanntmachung des Hinweises auf die Patenterteilung : 09.09.87 Patentblatt 87/37

(84) Benannte Vertragsstaaten :
AT BE CH DE FR GB IT LI NL

(56) Entgegenhaltungen :
AT-A-  176 415
US-A- 2 676 109
US-A- 3 629 137

(73) Patentinhaber : Degussa Aktiengesellschaft
Weissfrauenstrasse 9
D-6000 Frankfurt am Main 1 (DE)

(72) Erfinder : Kiss, Akos, Dr. Dipl.-Chem.
Keplerstrasse 69
D-8750 Aschaffenburg (DE)
Erfinder : Kleinschmit, Peter, Dr. Dipl.-Chem.
Wildaustrasse 19
D-6450 Hanau (DE)
Erfinder : Völker, Werner, Dr. Dipl.-Chem.
Auf dem Niederberg 45
D-6368 Bad Vilbel (DE)
Erfinder : Halbritter, Günter, Dipl.-Ing.
Rhönstrasse 6
D-8752 Schöllkrippen (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft lumineszierende Gläser, insbesondere lumineszierende Glasfritten zum Glasieren von keramischen Produkten.

Luminophore bzw. Leuchtstoffe sind Substanzen, die befähigt sind, nach Energieabsorption (Tageslicht, Ultraviolett-, Röntgenstrahlung u. a.) Licht auszustrahlen. Diese Lichtausstrahlung erfolgt mit größerer Wellenlänge als die absorbierte Strahlung besitzt und geschieht während der Erregung selbst und in verschieden langen Zeiträumen danach.

Nach herrschender Meinung handelt es sich bei den Leuchtstoffen um feste, kristalline Verbindungen, in denen einige Kationen des Grundmaterials durch fremde Kationen ersetzt sind, wobei man die eingebauten Kationen mit der umgebenden Schar von Anionen als sogenannte Leuchtzentren auffaßt. Durch Zerkleinern der Leuchtstoffkristallite wird die Leuchtfähigkeit bei den bekannten Luminophoren völlig zerstört.

Fluoreszierende Gläser zur Verwendung in Laser sind aus US-A-3 629 137 bekannt. Sie weisen folgende Zusammensetzung auf : 85-60 Mol% $SiO_2$, 10-30 Mol% $R_2O$ (wobei R = Li, Na oder K), 5-20 Mol% PbO, 0,1-3,0 Mol% $Nd_2O_3$ und 0,001-0,1 Mol% $V_2O_5$. Sie enthalten $Nd^{3+}$-ionen als aktives fluoreszierendes Element und $V^{5+}$ als zusätzliche Ionen, die eine Verbesserung der Fluoreszenzeigenschaften bewirken. Diese Verbesserung wird nur erreicht, wenn erstens $Nd^{3+}$-ionen als fluoreszierendes Element mit einem Gehalt von 0,1-3,0 Mol% vorhanden sind und zweitens der Gehalt an $V_2O_5$ nicht über 0,1 Mol% steigt. Wenn der Gehalt an $V_2O_5$ über 0,1 Mol% liegt, wirken die im Überschuß vorhandenen $V^{5+}$-ionen als Verunreinigungen, die die Fluoreszenzeigenschaften des Glases beeinträchtigen.

Zur Herstellung von z. B. Fliesen mit lumineszierenden Glasurüberzügen hat man bisher Mischungen aus kristallinen Leuchtstoffen und üblichen Glasfritten aufgebrannt. Dabei durften allerdings Brenntemperaturen von 700 bis 800 °C nicht überschritten werden, da bei höheren Temperaturen, die zum Aufbrennen interessanter Glasfritten notwendig sind, die Leuchtstoffe zerstört werden und keine Leuchtstoffeigenschaften mehr aufweisen.

Es war daher Aufgabe der vorliegenden Erfindung, lumineszierende Gläser, insbesondere lumineszierende Glasfritten zum Glasieren von keramischen Produkten zu entwickeln.

Diese Aufgabe wurde erfindungsgemäß durch Gläser folgender Zusammensetzung gelöst :

a) 0 bis 80 Mol% Alkalioxide (Natriumoxid, Kaliumoxid, Lithiumoxid), einzeln oder zu mehreren 0 bis 30 Mol% Erdalkalioxide (Magnesiumoxid, Kalziumoxid, Strontiumoxid, Bariumoxid), einzeln oder zu mehreren, wobei mindestens 2 Mol% Alkaliund/oder Erdalkalioxide anwesend sein müssen

b) 7 bis 90 Mol% Siliziumdioxid
   1 bis 50 Mol% Boroxid ($B_2O_3$)
   1 bis 30 Mol% Aluminiumoxid
c) 0,1 bis 5 Mol% Bleioxid (PbO)
   0,1 bis 10 Mol% Vanadiumpentoxid ($V_2O_5$)

Entgegen der herrschenden Meinung, nach der im festen Zustand nur kristalline Verbindungen Leuchtstoffeigenschaften besitzen können, zeigen diese röntgenamorphen Gläser überraschenderweise ebenfalls Leuchtstoffeigenschaften, auch wenn sie in Form von Glasfritten vorliegen.

Diese Gläser absorbieren die Quecksilberlinie von 366 nm und emittieren im gelben Bereich. Außerdem absorbieren sie die Quecksilberlinie von 254 nm und emittieren entweder weißes Licht (bei $V_2O_5$-gehalten <2 Mol% und PbOgehalten <2 Mol%), oder im gelben Bereich ($V_2O_5$-gehalte >1,5 Mol%) und PbO-gehalte kleiner als $V_2O_5$-gehalte, oder im blauen Bereich ($V_2O_5$-gehalte <0,5 Mol%) und PbO-gehalte größer als $V_2O_5$-gehalte. Durch Variation der verschiedenen Erdalkali- und Alkalioxide bzw. deren Gehalte lassen sich die emittierten Farbtöne im geringen Umfang noch variieren.

Vorzugsweise verwendet man Gläser der folgenden Zusammensetzung :

a) 2 bis 45 Mol% Alkalioxide, einzeln oder zu mehreren je 0 bis 20 Mol% Magnesiumoxid, Kalziumoxid, Strontiumoxid und Bariumoxid
   b) 40 bis 90 Mol% Siliziumdioxid
      1 bis 20 Mol% Boroxid
      1 bis 10 Mol% Aluminiumoxid
c) 0,1 bis 5 Mol% Bleioxid
   0,1 bis 5 Mol% Vanadiumpentoxid.

Die lumineszierenden Gläser bzw. Fritten sind temperaturstabil, säurebeständig, verlieren beim Zerkleinern nicht ihre Leuchtstoffeigenschaften, sind transparent und farblos bei Tageslicht. Außerdem können sie eingefärbt werden.

Besonders bewährt haben sich folgende Glaszusammensetzungen :

a) 3 bis 20 Mol% Alkalioxide
b) 60 bis 85 Mol% Siliziumdioxid
   5 bis 15 Mol% Boroxid
   1 bis 5 Mol% Aluminiumoxid
c) 0,8 bis 2,5 Mol% Bleioxid
   0,4 bis 4 Mol% Vanadiumpentoxid.

Die Herstellung der erfindungsgemäßen Gläser erfolgt durch Zusammenschmelzen der Bestandteile bzw. entsprechender Rohprodukte (z. B. Kaolin, Feldspat, Quarzsand) bei Temperaturen von 1 300 bis 1 450 °C in geeigneten Öfen (z. B. Gasofen, Elektroschmelzwanne) während 0,5 bis 5 Stunden. Die Herstellung der Fritten erfolgt durch Abschreckung der Glasschmelzen mit Wasser.

Folgende Gläser wurden nach diesen Verfahren beispielsweise hergestellt, die bei 366 nm alle gelb lumineszieren :

1. 2,0 Mol % $Li_2O$, 5,5 Mol% $Na_2O$, 6,5 Mol% $K_2O$,
2,3 Mol% MgO, 5,5 Mol% CaO, 2,2 Mol% SrO,
2,0 Mol% BaO, 2,5 Mol% $Al_2O_3$, 9,0 Mol% $B_2O_3$,
61,0 Mol% $SiO_2$, 1,2 Mol% PbO, 0,3 Mol% $V_2O_5$.

2. 5,2 Mol% $Na_2O$, 9,3 Mol% $K_2O$, 4,0 Mol% $Al_2O_3$,
12,5 Mol% $B_2O_3$, 66,6 Mol% $SiO_2$, 1,1 Mol% PbO,
1,3 Mol% $V_2O_5$.

3. 10,0 Mol% $K_2O$, 3,5 Mol% CaO, 2,4 Mol% BaO,
2,6 Mol% $Al_2O_3$, 8,5 Mol% $B_2O_3$, 69,0 Mol% $SiO_2$,
1,8 Mol% PbO, 2,2 Mol% $V_2O_5$.

4. 3,0 Mol% $Na_2O$, 6,4 Mol% $K_2O$, 1,2 Mol% $Al_2O_3$,
5,1 Mol% $B_2O_3$, 81,5 Mol% $SiO_2$, 1,3 Mol% PbO,
1,5 Mol% $V_2O_5$.

5. 19,0 Mol% BaO, 8,0 Mol% CaO, 6,2 Mol% $B_2O_3$,
3,5 Mol% $Al_2O_3$, 62,0 Mol% $SiO_2$, 0,9 Mol% PbO,
0,4 Mol% $V_2O_5$.

6. 15,0 Mol% BaO, 7,0 Mol% CaO, 8,4 Mol% $B_2O_3$,
4,0 Mol% $Al_2O_3$, 63,3 Mol% $SiO_2$, 0, Mol% PbO,
1,5 Mol% $V_2O_5$.

7. 9,8 Mol5% $K_2O$, 12,4 Mol% BaO, 5,1 Mol% CaO,
5,4 Mol% $B_2O_3$, 3,0 Mol% $Al_2O_3$, 62,9 Mol% $SiO_2$,
1,0 Mol% PbO, 0,4 Mol% $V_2O_5$.

Bei einer Anregung mit 254 nm lumineszieren die Gläser 2, 4 und 6 weiß, das Glas 3 gelb und die Gläser 1, 5 und 7 blau.

## Patentansprüche

1. Lumineszierende Gläser, insbesondere lumineszierende Glasfritten zum Glasieren von keramischen Produkten, gekennzeichnet durch folgende Zusammensetzung :
a) 0 bis 80 Mol % Alkalioxide (Natriumoxid, Kaliumoxid, Lithiumoxid), einzeln oder zu mehreren, 0 bis 30 Mol % Erdalkalioxide (Magnesiumoxid, Kalziumoxid, Strontiumoxid, Bariumoxid), einzeln oder zu mehreren, wobei mindestens 2 Mol % Alkali- und/oder Erdalkalioxide anwesend sein müssen.
b) 7 bis 90 Mol % Siliziumdioxid
1 bis 50 Mol % Boroxid ($B_2O_3$)
1 bis 30 Mol % Aluminiumoxid
c) 0,1 bis 5 Mol % Bleioxid (PbO)
0,1 bis 10 Mol % Vanadiumpentoxid ($V_2O_5$)

2. Lumineszierende Gläser nach Anspruch 1, gekennzeichnet durch folgende Zusammensetzung :
a) 2 bis 45 Mol % Alkalioxide, einzeln oder zu mehreren, je 0 bis 20 Mol % Magnesiumoxid, Kalziumoxid, Strontiumoxid und Bariumoxid
b) 40 bis 90 Mol % Siliziumdioxid
1 bis 20 Mol % Boroxid
1 bis 10 Mol % Aluminiumoxid
c) 0,1 bis 5 Mol % Bleioxid
0,1 bis 5 Mol % Vanadiumpentoxid

3. Lumineszierende Gläser nach Anspruch 1 und 2, gekennzeichnet durch folgende Zusammensetzung :
a) 3 bis 20 Mol % Alkalioxide
b) 60 bis 85 Mol % Siliziumdioxid
5 bis 15 Mol % Boroxid
1 bis 5 Mol % Aluminiumoxid
c) 0,8 bis 2,5 Mol % Bleioxid
0,4 bis 4 Mol % Vanadiumpentoxid

## Claims

1. Luminescent glasses, in particular luminescent glass frits for the glazing of ceramic products, characterised by the following composition :
a) from 0 to 80 mol % of alkali oxides (sodium oxide, potassium oxide, lithium oxide), individually or jointly, from 0 to 30 mol% of alkaline earth oxides (magnesium oxide, calcium oxide, strontium oxide, barium oxide), individually or jointly, wherein at least two mol% of alkali and/or alkali earth oxides must be present
b) from 7 to 90 mol% of silicon dioxide
from 1 to 50 mol% of boron oxide ($B_2O_3$)
from 1 to 30 mol% of aluminium oxide
c) from 0.1 to 5 mol% of lead oxide (PbO)
from 0.1 to 10 mol% of vanadium pentoxide ($V_2O_5$).

2. Luminescent glasses according to claim 1, characterised by the following composition :
a) from 2 to 45 mol% of alkali oxides, individually or jointly, from 0 to 20 mol% of magnesium oxide, calcium oxide, strontium oxide and barium oxide respectively,
b) from 40 to 90 mol% of silicon dioxide
from 1 to 20 mol% of boron oxide
from 1 to 10 mol% of aluminium oxide
c) from 0.1 to 5 mol% of lead oxide
from 0.1 to 5 mol % of vanadium pentoxide.

3. Luminescent glasses according to claims 1 and 2, characterised by the following composition :
a) from 3 to 20 mol% of alkali oxides
b) from 60 to 85 mol% of silicon dioxide
from 5 to 15 mol% of boron oxide
from 1 to 5 mol% of aluminium oxide
c) from 0.8 to 2.5 mol% of lead oxide
from 0.4 to 4 mol% of vanadium pentoxide.

## Revendications

1. Verres luminescents, en particulier compositions de matières vitrifiables luminescentes pour la glaçure de produits céramiques, caractérisés par la composition suivante :

a) 0 à 80 % en mole d'un ou plusieurs oxydes alcalins (oxyde de sodium, oxyde de potassium, oxyde de lithium), 0 à 30 % en mole d'un ou plusieurs oxydes alcalino-terreux (oxyde de magnésium, oxyde de calcium, oxyde de strontium, oxyde de baryum), au moins 2 % en mole d'oxydes alcalins et/ou alcalino-terreux devant être présents,

b) 7 à 90 % en mole de dioxyde de silicium,
1 à 50 % en mole d'oxyde de bore ($B_2O_3$),
1 à 30 % en mole d'oxyde d'aluminium,

c) 0,1 à 5 % en mole d'oxyde de plomb (PbO)
0,1 à 10 % en mole de pentoxyde de vanadium ($V_2O_5$).

2. Verres luminescents selon la revendication 1, caractérisés par la composition suivante :

a) 2 à 45 % en mole d'un ou plusieurs oxydes alcalins, respectivement 0 à 20 % en mole d'oxyde de magnésium, d'oxyde de calcium, d'oxyde de strontium et d'oxyde de baryum,

b) 40 à 90 % en mole de dioxyde de silicium,
1 à 20 % en mole d'oxyde de bore,
1 à 10 % en mole d'oxyde d'aluminium,

c) 0,1 à 5 % en mole d'oxyde de plomb,
0,1 à 5 % en mole d'oxyde de vanadium.

3. Verres luminescents selon la revendication 1 ou 2, caractérisés par la composition suivante :

a) 3 à 20 % en mole d'oxydes alcalins,

b) 60 à 85 % en mole de dioxyde de silicium,
5 à 15 % en mole d'oxyde de bore
1 à 5 % en mole d'oxyde d'aluminium,

c) 0,8 à 2,5 % en mole d'oxyde de plomb
0,4 à 4 % en mole de pentoxyde de vanadium.